# FASCICULE DE BREVET EUROPEEN

(11) **EP 3 470 201 B1**
(45) Date de publication et mention de la délivrance du brevet: **27.01.2021**
(21) Numéro de dépôt: 18197700.0
(22) Date de dépôt: 28.09.2018
(51) Int. Cl.: B29C 45/42, B29C 45/76

(54) **PROCÉDÉ ET DISPOSITIF DE PILOTAGE OPTIMISÉ D'UN ROBOT MULTIAXE POUR PRESSE D'INJECTION**
VERFAHREN UND VORRICHTUNG ZUR OPTIMIERTEN STEUERUNG EINES MULTIAXIALEN ROBOTERS FÜR SPRITZGIESSMASCHINE
METHOD AND DEVICE FOR OPTIMISED CONTROL OF A MULTI-AXIS ROBOT FOR AN INJECTION MOULDING MACHINE

(30) Priorité: 16.10.2017 FR 1759695
(43) Date de publication de la demande: 17.04.2019
(73) Titulaire: SEPRO ROBOTIQUE, 85000 La Roche-sur-Yon (FR)
(72) Inventeur: L'HENORET, Benjamin, 85430 Aubigny (FR); BOCQUIER, Nathalie, 85000 La Roche-sur-Yon (FR); LEDUC, Jean-Philippe, 85170 Dompierre-sur-Yon (FR); FRIESS, Dominique, 17000 La Rochelle (FR)
(74) Mandataire: Vidon Brevets & Stratégie

(56) Documents cités:
- EP-A1- 1 008 433
- WO-A1-2012/045105
- JP-A- 2002 059 465
- JP-A- 2007 245 436
- US-A- 5 250 239
- US-A1- 2002 051 833
- US-A1- 2009 278 273
- "Selogica - the control unit for all ALLROUNDER injection moulding machines", 20020501, 1 mai 2002 (2002-05-01), pages 1-31, XP002305034,

## Description

### 1. Domaine de l'invention

L'invention concerne les robots à plusieurs axes, notamment les robots cartésiens, adaptés à l'industrie de la plasturgie, et en particulier à la manipulation de produits délivrés par des presses d'injection plastique. Plus particulièrement, l'invention concerne le contrôle et la programmation de tels robots.

### 2. Art antérieur

Les presses d'injection plastique produisent très rapidement un nombre important de pièces. A la fin de chaque cycle d'injection, il est nécessaire de retirer, ou décharger, sans les détériorer, les pièces qui viennent d'être injectées. C'est le rôle de robots, présentant à l'extrémité d'un bras des moyens de préhension, déchargeant via des moyens adaptés, comprenant par exemple des moyens d'aspiration, les pièces rendues accessibles après l'ouverture du moule.

La production devant être globalement la plus rapide possible, cette opération de déchargement doit être effectuée de la façon la plus efficace possible. Tout gain de temps, même de l'ordre du dixième ou centième de seconde, s'avère important.

L'opération de déchargement comprend essentiellement les pas (étapes successives) suivants :
- ouverture de la presse ;
- le cas échéant, actionnement d'actuateurs permettant d'éloigner une pièce moulée de son moule ;
- approche des moyens de préhension, à l'aide du ou des bras du robot ;
- préhension de la ou des pièces moulées ;
- retrait des moyens de préhension ;
- fermeture du moule en vu d'un nouveau cycle.

Ces pas sont généralement effectués successivement, selon un mode dit contrôlé, c'est-à-dire que l'on attend la fin d'un pas pour débuter le suivant. La programmation du robot se présente donc sous la forme d'une série de pas, devant chacun faire l'objet d'un paramétrage précis.

Le déplacement du robot selon ses différents axes, classiquement 3, 5, 6 axes voire plus est contrôlé par un programme de pilotage, défini par un expert tentant de déterminer, en fonction de son expertise et de son expérience, le déplacement le plus efficace, dans le temps et dans l'espace.

Cette technique est par exemple décrite dans les documents US2009/278273, US2002/051833, JP2002 059465, WO2012/045105, EP1008 433 et JP2007245436. Ces documents décrivent ainsi des procédés de pilotage d'un robot multiaxe selon une séquence de pas programmée par un expert, ou spécialiste, connaissant et maîtrisant un langage de programmation spécifique complexe, et tenant compte de ses observations directes ou bien de sa propre expérience.

### 3. Inconvénients de l'art antérieur

Un inconvénient de cette approche est que, malgré tout, le déplacement peut ne pas être parfaitement optimisé, induisant une perte de quelques dixièmes ou centièmes de seconde, par exemple, à chaque cycle, ce qui représente au final une perte importante d'efficacité, en termes de quantité produite, et donc de coût de production. C'est le cas notamment lorsque l'expert peut prend certaines précautions, telles que des marges, conduisant à des allongements du temps.

Un autre inconvénient est qu'elle exige une programmation effectuée par un expert, ou à tout le moins un intervenant ayant bénéficié d'une formation spécifique importante.

Encore un autre inconvénient est que ce mode de programmation n'est pas directement reproductible, et que l'expert doit systématiquement intervenir, pour un nouveau produit, ou dès qu'une modification est effectuée sur le moule ou sur la machine d'injection, ou pour mettre en œuvre un process similaire sur une autre machine. En effet, les langages de programmation ne sont pas accessibles sans formation, ou à tout le moins ne sont pas aisément et directement utilisable par un opérateur non expert, ce qui impose l'intervention régulière et parfois couteuse d'un expert.

Il existe donc un besoin d'optimisation et de simplification de la programmation et du fonctionnement des robots de déchargement associés aux presses d'injection. En particulier, il a un besoin d'une technique de programmation des robots de déchargement associés aux presses d'injection ne nécessitant pas l'intervention systématique d'un expert maîtrisant un langage de programmation complexe.

L'invention a notamment pour objectif de pallier au moins certains de ces inconvénients, et de répondre à ce besoin.

### 4. Caractéristiques principales et optionnelles de l'invention

Pour ceci, l'invention propose notamment un procédé de pilotage d'un robot multiaxe comprenant des moyens de préhension d'au moins une pièce moulée dans un moule d'une presse à injection, lesdits moyens de préhension étant montés à l'extrémité d'un bras mobile, selon une séquence de pas programmée.

Selon l'invention, ce procédé comprend les étapes suivantes :
- création de ladite séquence programmée, comprenant :
   - des opérations de saisie par un opérateur, comprenant les sous-étapes de :
      ∘ introduction de caractéristiques relatives audit moule et/ou auxdites pièces ;
      ∘ apprentissage d'un ensemble de points principaux du déplacement desdits moyens de préhension ;
   - un traitement automatique de génération de commandes dudit robot, comprenant les sous-étapes :
      ∘ optimisation de la prise de la ou des pièces dans le moule en fonction desdites caractéristiques ;
      ∘ détermination automatique de commandes de déplacement, en fonction desdits points principaux, telles que pour au moins un desdits pas, dit pas en cours, d'un instant de départ anticipé d'un pas suivant, avant la fin dudit pas en cours de façon que, lorsque ledit pas en cours et ledit pas suivant correspondent à des déplacements desdits moyens de préhension selon des directions sensiblement perpendiculaires, l'instant de départ anticipé est programmable sous la forme d'un ratio, prédéterminé ou fourni par l'opérateur, du déplacement du pas en cours ; puis
   - mise en œuvre de cycles de moulage, comprenant chacun une étape d'extraction de la ou desdites pièces moulées, ledit robot multiaxe étant piloté selon ladite séquence programmée, de façon qu'au moins deux pas soient effectués au moins en partie sur une même période de temps.

Ainsi, les commandes sont déterminées automatiquement, à partir de données simples à fournir, ne nécessitant pas de connaissance spécifique de programmation ni une forte expertise. Et elles le sont de façon optimisée automatiquement, les durées de chaque pas étant optimisées au plus juste, dans le respect des contraintes imposés, et des débuts anticipés de pas sont prévus lorsque ceci est possible.

Ainsi, le procédé combine automatiquement, sur une portion du temps, deux déplacements selon deux axes distincts, pour optimiser le déplacement global. Cette combinaison ne nécessite ni l'interprétation ni l'expertise d'un expert observant le déplacement global à appliquer, pour en déterminer des caractéristiques d'optimisation. Selon l'invention, il suffit de déterminer un ensemble de points du déplacement, dits points principaux, et les départs anticipés sont déterminés sans intervention humaine, c'est-à-dire sans nécessité d'une expertise de programmation et d'une connaissance d'un langage de programmation.

Avantageusement, la programmation de l'instant de départ d'un pas par rapport à un autre pas se fait sous la forme d'un ratio, fixe ou programmable. Un tel ratio permet de simplifier le pilotage d'un robot multiaxe et de s'affranchir de l'intervention d'un expert se basant sur une observation directe de chaque situation, en fonction de son expérience.

Ainsi un utilisateur non expert n'a besoin que d'entrée des données simples, les points principaux, et le reste du procédé, notamment la détermination de commandes de déplacement, ainsi que le cas échéant l'optimisation de la prise de la pièce se faisant de manière automatique.

Selon un aspect particulier de l'invention, ladite étape d'apprentissage d'un ensemble de points principaux comprend une étape de définition d'au moins une position de sécurité virtuelle, dite came virtuelle, décalée par rapport à la position d'une came physique prévue pour empêcher l'introduction desdits moyens de préhension entre les mâchoires dudit moule tant qu'il n'est complètement ouvert, ladite came virtuelle étant définie de façon adaptée à un moule et/ou une pièce de façon à autoriser une introduction contrôlée desdits moyens de préhension entre les mâchoires dudit moule avant ouverture complète de ce dernier.

La mise en œuvre d'une telle came virtuelle permet d'obtenir des gains d'efficacité importants. A nouveau, elle ne nécessite en revanche ni connaissance de la programmation, ni expertise, puisque c'est le procédé qui exploite la position de cette came virtuelle pour optimiser les commandes.

Selon un autre aspect de l'invention, le ratio peut représenter sensiblement 70% du déplacement du pas en cours.

Selon un autre aspect de l'invention, ledit pas en cours est l'ouverture dudit moule et ledit pas suivant est un déplacement desdits moyens de préhension, et/ou ledit pas en cours est un déplacement desdits moyens de préhension et ledit pas suivant est la fermeture dudit moule, l'étape de détermination de commandes de déplacement tenant compte de la ou desdites cames virtuelles.

En effet, une autre optimisation efficace et la combinaison des déplacements des moyens de préhension et de l'ouverture et/ou de la fermeture du moule.

Selon encore un autre aspect de l'invention, ledit pas en cours est un déplacement desdits moyens de préhension et ledit pas suivant est un actionnement de moyens d'éjection, et/ou ledit pas en cours est un retrait desdits moyens d'éjection, et ledit pas suivant est un déplacement desdits moyens de préhension.

La combinaison du déplacement des moyens de préhension et des moyens d'éjection, notamment éjecteurs ou noyaux, permet à nouveau un gain de temps.

Selon une caractéristique particulière, ladite étape de détermination peut tenir compte de la vitesse de déplacement desdits moyens de préhension et/ou agit sur ladite vitesse de déplacement.

Selon une autre caractéristique particulière, le procédé de l'invention peut mettre en œuvre une interface graphique, simulant le rendu de chacun desdits pas.

Ceci concourt à rendre possible et efficace une utilisation par un utilisateur non spécialiste.

L'invention concerne également un dispositif de pilotage d'un robot multiaxe mettant en œuvre le procédé présenté ci-dessus. Un tel dispositif comprend notamment des moyens de création de ladite séquence programmée, comprenant :
- des moyens de saisie par un opérateur de caractéristiques relatives audit moule et/ou auxdites pièces ;
- des moyens d'apprentissage d'un ensemble de points principaux du déplacement desdits moyens de préhension, saisis par un opérateur ;
- des moyens de génération automatique de commandes dudit robot comprenant :
   - des moyens d'optimisation de la prise de la ou des pièces dans le moule en fonction desdites caractéristiques ; et
   - des moyens de détermination de commandes de déplacement, en fonction desdits points principaux, telles que pour au moins un desdits pas, dit pas en cours, d'un instant de départ anticipé d'un pas suivant, avant la fin dudit pas en cours de façon que, lorsque ledit pas en cours et ledit pas suivant correspondent à des déplacements desdits moyens de préhension selon des directions sensiblement perpendiculaires, l'instant de départ anticipé est programmable sous la forme d'un ratio, prédéterminé ou fourni par l'opérateur, du déplacement du pas en cours ; et
- des moyens de mise en œuvre de cycles de moulage, comprenant chacun une extraction de la ou desdites pièces moulées, ledit robot multiaxe étant piloté selon ladite séquence programmée, de façon qu'au moins deux pas soient effectués au moins en partie sur une même période de temps.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés parmi lesquels :
- la figure 1 est un organigramme simplifié illustrant un mode de mise en œuvre de l'invention ;
- la figure 2 illustre un aspect d'optimisation selon l'invention, combinant deux déplacements perpendiculaires ;
- la figure 3 illustre la prise en compte de l'ouverture et de l'ouverture d'un moule, dans l'optimisation du traitement ;
- les figures 4A et 4B sont des exemples de vue d'une interface homme-machine permettant la mise en œuvre de l'invention par un opérateur non spécialiste, respectivement pour l'introduction de caractéristiques et l'apprentissage de points.

### 6. Description d'un mode de réalisation particulier

Comme indiqué précédemment, l'invention concerne donc l'optimisation de la mise en œuvre de robots, pour la manipulation de produits délivrés par des presses d'injection plastique. Il peut notamment s'agir de robots tels que ceux fabriqués et commercialisés par la Déposante.

Ces robots doivent être programmés de façon précise, pour piloter leur déplacement, et la manipulation des pièces moulées. En effet, la durée d'un cycle de moulage est courte, de l'ordre de quelques secondes ou dixièmes de seconde, et il convient de perdre le moins de temps possible pendant les opérations de déchargement du moule, pour passer le plus rapidement au cycle suivant.

Il existe des langages de programmation adaptés pour ces opérations, mais ils nécessitent une connaissance spécifique. En outre, même un expert dans ces langages peut ne pas produire le programme le plus efficace, en termes de temps de traitement. Notamment, un programmeur, ou un expert, définit généralement les étapes de déplacement et de préhension les unes après les autres, sous la forme de pas, comme prévu par le langage de programmation. Cette définition se fait généralement suite à des observations directes pour chaque situation, ou en fonction de l'expérience de cet expert. Il peut en outre prendre, par précaution, des marges conduisant à des allongements du temps. Enfin, les robots, et donc la programmation associée, sont contraints par des sécurités, appelés cames, visant à empêcher certains déplacements, notamment la pénétration des moyens de préhension entre les mâchoires du moule, tant que celui-ci n'est pas complètement ouvert.

La Déposante a développé une approche tout à fait nouvelle de la programmation de ces robots, visant à déterminer automatiquement les pas les plus efficaces, à partir de données simples, pouvant être fournies par un utilisateur n'ayant pas les connaissances particulières d'un programmeur ou d'un expert. En fonction de ces données, les déplacements, leurs combinaisons et leurs anticipations possibles sont calculés de façon optimisée, limitant le temps de traitement autant que faire se peut, sans introduire de risque de programmation erronée, susceptible de nuire au bon fonctionnement.

De la même façon, les opérations de préhension sont optimisées, par exemple en anticipant sur le déploiement complet d'éjecteurs ou de noyaux.

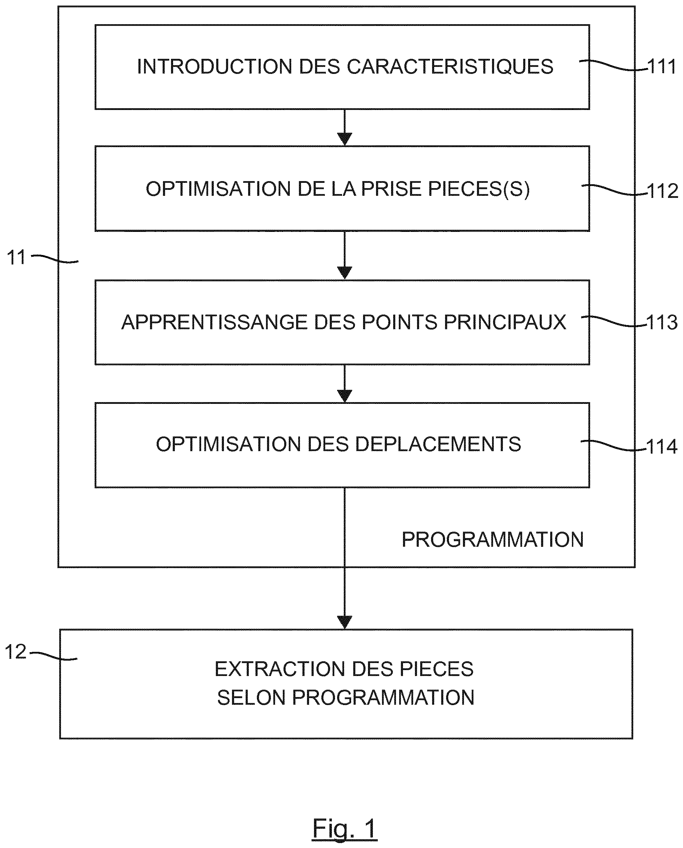

Le procédé de l'invention est schématisé, de façon générale, sur la figure 1.

Il comprend une étape de programmation 11 et une étape d'extraction 12 des pièces moulées, mettant en œuvre à chaque cycle de moulage le programme créé automatiquement à l'étape 11.

Celle-ci peut se décomposer en quatre sous-étapes 111 à 114, comme détaillé ci-après.

### sous-étape 111 :

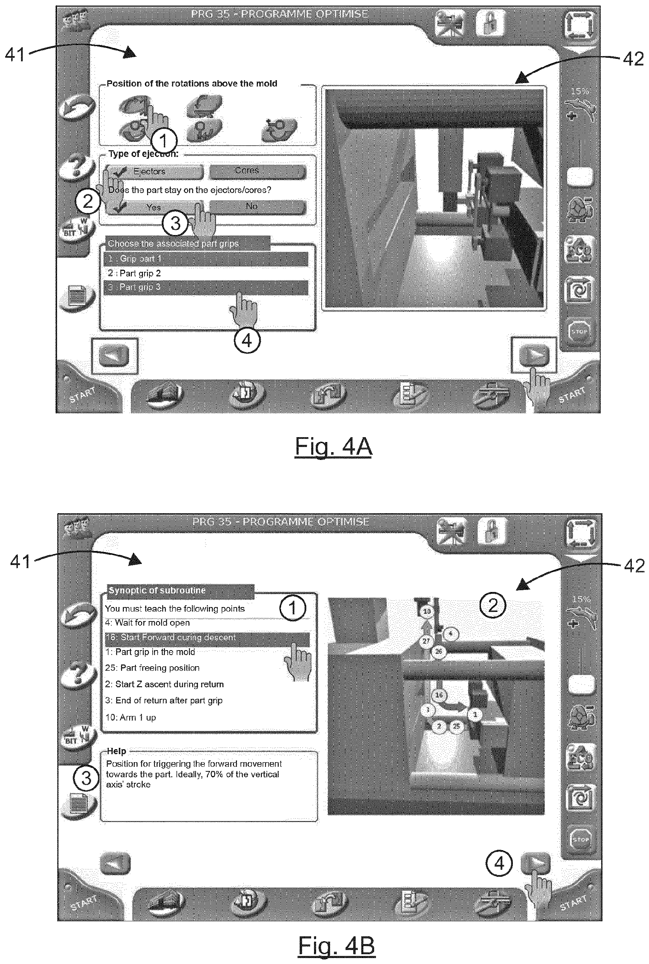

Cette sous-étape 111 consiste en l'introduction par un utilisateur ou opérateur non expert de caractéristiques relatives notamment au moule et/ou aux pièces moulées, par exemple à l'aide d'une interface homme-machine simplifiée, telle qu'illustrée par la figure 4A : une série de questions est posée à l'utilisateur, via la partie gauche 41 d'une page affichée sur un écran. La partie droite 42 de l'écran peut représenter le moule, les pièces et les moyens de préhension. Différentes icônes peuvent en outre être proposées pour faciliter la saisie des données et la gestion de la programmation.

L'utilisateur est ainsi invité à préciser :
- les rotations requises au-dessus du moule ;
- si l'on utilise des éjecteurs ou des noyaux ;
- si les éjecteurs ou les noyaux peuvent pousser les pièces ;
- si des rotations sont possibles à l'intérieur du moule ;

### sous-étape 112 :

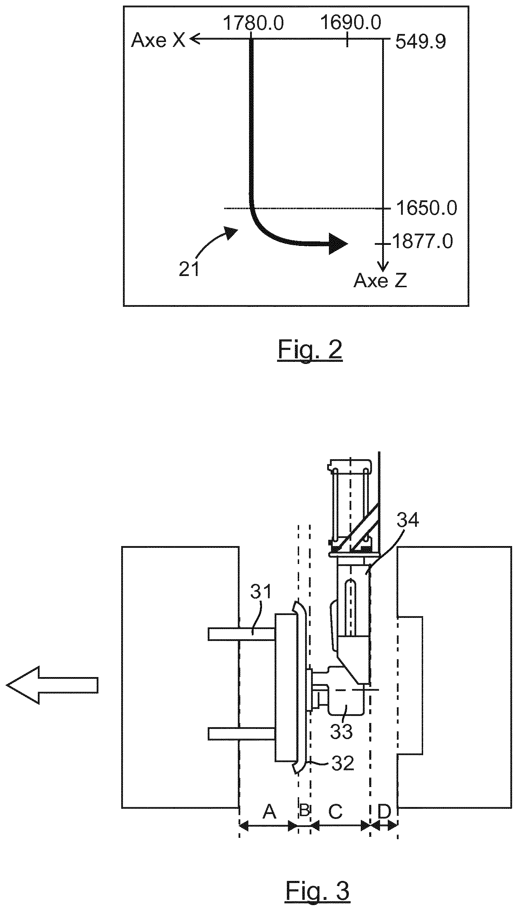

En fonction de l'ensemble de ces caractéristiques fournies par l'utilisateur, le procédé optimise (112) de lui-même, c'est-à-dire de manière automatique la prise de la ou des pièces dans le moule. Comme on le voit sur la figure 3, cette optimisation tient notamment compte de différentes distances :
- A : course des éjecteurs 31 ;
- B : épaisseur de la pièce moulée 32 ;
- C : largeur de l'ensemble préhenseur (ou moyens de préhension) 33 et bras 34 ;
- D : distance nécessaire pour dégager la pièce du moule.
Elle tient compte également des déplacements nécessaires, notamment rotations, du préhenseur, et de celui des éjecteurs. Selon l'invention, une optimisation du temps de traitement peut notamment être obtenue en déplaçant le préhenseur simultanément au déplacement des éjecteurs.

### sous-étape 113 :

Ensuite, l'utilisateur indique, par exemple via une interface homme-machine telle qu'illustrée en figure 4B, les déplacements requis, sous la forme d'une série de points principaux. A nouveau, l'introduction de données est simple, et ne nécessite pas de connaissance de programmation particulière (c'est le procédé qui produira lui-même les commandes spécifiques au langage de programmation).

Ainsi, l'utilisateur précise les différents déplacements requis sous la forme de points, listés sur la partie gauche 41 de l'écran. La vue de la partie droite 42 permet de visualiser directement le déplacement requis.

L'utilisateur peut également introduire la position d'une came virtuelle, distincte de la came physique classiquement présente. La came physique est une came de sécurité, destinée à arrêter le robot en cas de problème, détecté par exemple après un contrôle de cohérence (par exemple si, suite à une anomalie, le bras du robot est resté en position haute). Cette came de sécurité empêche également une pénétration du préhenseur entre les mâchoires du moule, tant qu'il n'est pas intégralement ouvert.

L'invention prévoit la mise en œuvre complémentaire d'une came virtuelle, autorisant le préhenseur à pénétrer au moins partiellement entre les mâchoires avant l'ouverture complète du moule. Ceci permet bien sûr un gain de temps substantiel.

La position de cette came virtuelle varie, et est optimisée, en fonction du moule et des pièces moulées.

### sous-étape 114 :

Enfin, le procédé détermine automatiquement (114) les commandes de déplacement, en fonction des points principaux et de la came virtuelle. Ces commandes sont optimisées, selon l'invention, de façon que pendant au moins certains des pas, dit pas en cours un instant de départ anticipé d'un pas suivant est prévu, avant la fin du pas en cours.

Un exemple de cette approche est illustré par la figure 2. Dans cet exemple, l'utilisateur a enregistré (sous-étape 113) un premier déplacement selon l'axe Z, de la position 549,9 à la position 1877,0, puis un second déplacement selon l'axe X, de la position 1780,0 à la position 1690,0. Selon l'art antérieur, ces deux déplacements seraient effectués l'un après l'autre.

Selon l'invention en revanche, le procédé détermine un démarrage anticipé du second déplacement selon l'axe X, alors que le premier déplacement selon l'axe Z n'est pas achevé. Ainsi, dès que l'on atteint la position en Z 1650,0, le déplacement en X est activé, générant un déplacement simultané selon les deux directions sur la portion 21.

Ceci permet un gain de temps sur l'ensemble des deux déplacements, mais ne nécessite pas de programmation complexe de la part d'un expert. C'est le procédé qui détermine de lui-même la courbe de déplacement et les commandes requises.

Le lancement anticipé du second déplacement peut avantageusement intervenir sensiblement à 70% du premier déplacement. Ce pourcentage, ou ratio, peut être programmable, et le cas échéant introduit par l'utilisateur lors de l'étape 113.

Les vitesses des différents déplacements peuvent également être optimisées.

En complément, il est possible d'adapter les vitesses d'ouverture et de fermeture du moule, ainsi que sur la course d'ouverture de ce moule : en référence à la figure 3, on note qu'il n'est utile qu'il s'ouvre au-delà de la somme des distances A+B+C+D.

L'invention concerne également un dispositif mettant en œuvre ce procédé. Il comprend des moyens de traitement, par exemple sous la forme d'un microprocesseur ou d'un microcontrôleur, associés à des mémoires contenant d'une part les instructions logicielles de mise en œuvre du procédé, et d'autre part les données relatives au séquences programmées de pilotage du robot.

Ces moyens de traitement sont associés à un écran, le cas échéant tactile, et des moyens de saisie des données fournies lors des étapes 111 et 112.

## Revendications

1. Procédé de pilotage d'un robot multiaxe comprenant des moyens de préhension (33) d'au moins une pièce moulée (32) dans un moule d'une presse à injection, lesdits moyens de préhension (33) étant montés à l'extrémité d'un bras mobile (34), selon une séquence de pas programmée,
comprenant les étapes suivantes :
- création de ladite séquence programmée (11), comprenant :
- des opérations de saisie par un opérateur, comprenant les sous-étapes de :
∘ introduction de caractéristiques relatives audit moule et/ou auxdites pièces (111) ;
∘ apprentissage d'un ensemble de points principaux du déplacement desdits moyens de préhension (113);
- un traitement automatique de génération de commandes dudit robot, comprenant les sous-étapes :
∘ optimisation de la prise de la ou des pièces dans le moule en fonction desdites caractéristiques (112) ;
∘ détermination automatique de commandes de déplacement (114), en fonction desdits points principaux, telles que pour au moins un desdits pas, dit pas en cours, d'un instant de départ anticipé d'un pas suivant, avant la fin dudit pas en cours de façon que, lorsque ledit pas en cours et ledit pas suivant correspondent à des déplacements desdits moyens de préhension (33) selon des directions sensiblement perpendiculaires, l'instant de départ anticipé est programmable sous la forme d'un ratio, prédéterminé ou fourni par l'opérateur, du déplacement du pas en cours ;
- mise en œuvre de cycles de moulage, comprenant chacun une étape d'extraction (12) de la ou desdites pièces moulées (32), ledit robot multiaxe étant piloté selon ladite séquence programmée, de façon qu'au moins deux pas soient effectués au moins en partie sur une même période de temps.

2. Procédé de pilotage d'un robot selon la revendication 1, **caractérisé en ce que** ladite étape d'apprentissage d'un ensemble de points principaux (113) comprend une étape de définition d'au moins une position de sécurité virtuelle, dite came virtuelle, décalée par rapport à la position d'une came physique prévue pour empêcher l'introduction desdits moyens de préhension (33) entre les mâchoires dudit moule tant qu'il n'est complètement ouvert, ladite came virtuelle étant définie de façon adaptée à un moule et/ou une pièce de façon à autoriser une introduction contrôlée desdits moyens de préhension (33) entre les mâchoires dudit moule avant ouverture complète de ce dernier.

3. Procédé de pilotage d'un robot selon la revendication 1, **caractérisé en ce que** ledit ratio représente sensiblement 70% du déplacement du pas en cours.

4. Procédé de pilotage d'un robot selon l'une quelconque des revendications 2 à 3, **caractérisé en ce que** ledit pas en cours est l'ouverture dudit moule et ledit pas suivant est un déplacement desdits moyens de préhension (33), et/ou ledit pas en cours est un déplacement desdits moyens de préhension (33) et ledit pas suivant est la fermeture dudit moule, l'étape de détermination de commandes de déplacement tenant compte de la ou desdites cames virtuelles.

5. Procédé de pilotage d'un robot selon l'une quelconque des revendications 1 à 4, **caractérisé en ce que** ledit pas en cours est un déplacement desdits moyens de préhension (33) et ledit pas suivant est un actionnement de moyens d'éjection (31) et/ou ledit pas en cours est un retrait desdits moyens d'éjection (31), et ledit pas suivant est un déplacement desdits moyens de préhension (33).

6. Procédé de pilotage d'un robot selon l'une quelconque des revendications 1 à 5, **caractérisé en ce que** ladite étape de détermination (114) tient compte de la vitesse de déplacement desdits moyens de préhension (33) et/ou agit sur ladite vitesse de déplacement.

7. Procédé de pilotage d'un robot selon l'une quelconque des revendications 1 à 6, **caractérisé en ce qu'**il met en œuvre une interface graphique, simulant le rendu de chacun desdits pas.

8. Dispositif de pilotage d'un robot multiaxe comprenant des moyens de préhension (33) d'au moins une pièce moulée (32) dans un moule d'une presse à injection, lesdits moyens de préhension (33) étant montés à l'extrémité d'un bras mobile (34), selon une séquence de pas programmée,
comprenant des moyens de création de ladite séquence programmée, comprenant :
- des moyens de saisie par un opérateur de caractéristiques relatives audit moule et/ou auxdites pièces (32);
- des moyens d'apprentissage d'un ensemble de points principaux du déplacement desdits moyens de préhension (33), saisis par un opérateur ;
- des moyens de génération automatique de commandes dudit robot comprenant :
• des moyens d'optimisation de la prise de la ou des pièces (32) dans le moule en fonction desdites caractéristiques ; et
• des moyens de détermination de commandes de déplacement, en fonction desdits points principaux, telles que pour au moins un desdits pas, dit pas en cours, d'un instant de départ anticipé d'un pas suivant, avant la fin dudit pas en cours de façon que, lorsque ledit pas en cours et ledit pas suivant correspondent à des déplacements desdits moyens de préhension (33) selon des directions sensiblement perpendiculaires, l'instant de départ anticipé est programmable sous la forme d'un ratio, prédéterminé ou fourni par l'opérateur, du déplacement du pas en cours ; et
des moyens de mise en œuvre de cycles de moulage, comprenant chacun une extraction de la ou desdites pièces moulées (32), ledit robot multiaxe étant piloté selon ladite séquence programmée, de façon qu'au moins deux pas soient effectués au moins en partie sur une même période de temps.

## Patentansprüche

1. Verfahren zur Steuerung eines mehrachsigen Roboters, der Mittel (33) zum Greifen von mindestens einem Formteil (32) in einer Form einer Spritzgießmaschine aufweist, wobei die Mittel (33) zum Greifen an dem Ende eines beweglichen Arms (34) befestigt sind, gemäß einer programmierten Schrittsequenz,
in welcher es die folgenden Schritte aufweist:
- Erstellen der programmierten Sequenz (11), umfassend:
- Vorgänge der Erfassung durch eine Bedienperson, umfassend die folgenden Unterschritte:
- Eingeben von Merkmalen in Bezug auf die Form und/oder die Teile (111),
- Erlernen eines Satzes von Hauptpunkten des Bewegens der Greifmittel (113),
- ein automatisches Verarbeiten zum Erstellen von Befehlen des Roboters, umfassend die Unterschritte:
- Optimieren des Greifens des oder der Teile in der Form in Abhängigkeit der Merkmale (112),
- automatisches Bestimmen von Bewegungsbefehlen (114) in Abhängigkeit der Hauptpunkte, wie zum Beispiel für mindestens einen der Schritte, der laufender Schritt genannt wird, eines vorhergesehenen Startzeitpunkts eines nächsten Schritts vor dem Ende des laufenden Schritts, derart dass, wenn der laufende Schritt und der nächste Schritt Bewegungen der Mittel (33) zum Greifen in im Wesentlichen senkrechten Richtungen entsprechen, der vorhergesehene Startzeitpunkt in Form eines Verhältnisses, das vorbestimmt oder von dem Bediener bereitgestellt wird, der Bewegung des laufenden Schritts programmierbar ist,
- Umsetzen von Formzyklen, umfassend jeweils einen Schritt des Entnehmens (12) des oder der Formteile (32), wobei der mehrachsige Roboter gemäß der programmierten Sequenz derart gesteuert wird, dass mindestens zwei Schritte mindestens teilweise in einem gleichen Zeitraum durchgeführt werden.

2. Verfahren zur Steuerung eines Roboters nach Anspruch 1, **dadurch gekennzeichnet, dass** der Schritt des Erlernens eines Satzes von Hauptpunkten (113) einen Schritt des Definierens von mindestens einer virtuellen Sicherheitsposition umfasst, die virtueller Nocken genannt wird, die gegenüber der Position eines physischen Nockens versetzt ist, der vorgesehen ist, um das Einführen der Mittel (33) zum Greifen zwischen den Backen der Form zu verhindern, solange sie nicht vollständig geöffnet ist, wobei der virtuelle Nocken angepasst an eine Form und/oder ein Teil derart definiert ist, dass ein kontrolliertes Einführen der Mittel (33) zum Greifen zwischen die Backen der Form ermöglicht wird, bevor diese vollständig geöffnet ist.

3. Verfahren zur Steuerung eines Roboters nach Anspruch 1, **dadurch gekennzeichnet, dass** das Verhältnis im Wesentlichen 70 % der Bewegung des laufenden Schritts darstellt.

4. Verfahren zur Steuerung eines Roboters nach einem der Ansprüche 2 bis 3, **dadurch gekennzeichnet, dass** der laufende Schritt das Öffnen der Form ist, und der nächste Schritt ein Bewegen der Mittel (33) zum Greifen ist; und/oder dass der laufende Schritt ein Bewegen der Mittel (33) zum Greifen ist, und der nächste Schritt das Schließen der Form ist, wobei der Schritt des Bestimmens von Bewegungsbefehlen den oder die virtuellen Nocken berücksichtigt.

5. Verfahren zur Steuerung eines Roboters nach einem der Ansprüche 1 bis 4, **dadurch gekennzeichnet, dass** der laufende Schritt ein Bewegen der Mittel (33) zum Greifen ist, und der nächste Schritt ein Betätigen von Ausstoßmitteln (31) ist; und/oder der laufende Schritt ein Rückziehen der Ausstoßmittel (31) ist, und der nächste Schritt ein Bewegen der Mittel (33) zum Greifen ist.

6. Verfahren zur Steuerung eines Roboters nach einem der Ansprüche 1 bis 5, **dadurch gekennzeichnet, dass** der Schritt des Bestimmens (114) die Bewegungsgeschwindigkeit der Mittel (33) zum Greifen berücksichtigt und/oder auf die Bewegungsgeschwindigkeit einwirkt.

7. Verfahren zur Steuerung eines Roboters nach einem der Ansprüche 1 bis 6, **dadurch gekennzeichnet, dass** es eine graphische Schnittstelle umsetzt, die das Rendering von jedem der Schritte simuliert.

8. Vorrichtung zur Steuerung eines mehrachsigen Roboters, der Mittel (33) zum Greifen von mindestens einem Formteil (32) in einer Form einer Spritzgießmaschine aufweist, wobei die Mittel (33) zum Greifen an dem Ende eines beweglichen Arms (34) befestigt sind, gemäß einer programmierten Schrittsequenz,
wobei sie Mittel zum Erstellen der programmierten Sequenz aufweist, umfassend:
- Mittel zum Erfassen der Merkmale in Bezug auf die Form und/oder die Teile (32) durch eine Bedienperson;
- Mittel zum Erlernen eines Satzes von Hauptpunkten des Bewegens der Mittel (33) zum Greifen, durch eine Bedienperson;
- Mittel zur automatischen Erstellung von Befehlen des Roboters, umfassend:
- Mittel zum Optimieren des Greifens des oder der Teile (32) in der Form in Abhängigkeit von den Merkmalen; und
- Mittel zum Bestimmen von Bewegungsbefehlen in Abhängigkeit von den Hauptpunkten, wie zum Beispiel für mindestens einen der Schritte, der laufender Schritt genannt wird, eines vorhergesehenen Startzeitpunkts eines nächsten Schritts vor dem Ende des laufenden Schritts, derart dass, wenn der laufende Schritt und der nächste Schritt Bewegungen der Mittel (33) zum Greifen in im Wesentlichen senkrechten Richtungen entsprechen, der vorhergesehene Startzeitpunkt in Form eines Verhältnisses der Bewegung des laufenden Schritts, das vorbestimmt oder von dem Bediener bereitgestellt wird, programmierbar ist, und
Mittel zum Umsetzen von Formzyklen, umfassend jeweils ein Entnehmen des oder der Formteile (32), wobei der mehrachsige Roboter gemäß einer programmierten Sequenz derart gesteuert wird, dass mindestens zwei Schritte mindestens teilweise in einem gleichen Zeitraum durchgeführt werden.

## Claims

1. Method for controlling a multi-axis robot comprising means (33) for grasping at least one moulded part (32) in a mould of an injection moulding machine, said grasping means (33) being mounted at the end of a mobile arm (34), according to a programmed step sequence, comprising the subsequent steps:
- Creation of said programmed sequence (11), comprising:
- input operations by an operator, comprising the sub-steps of:
∘ introduction of characteristics relating to said mould and/or said parts (111);
∘ learning of a set of main points of movement of said grasping means (113);
- automatic command generation processing of said robot, comprising the sub-steps:
∘ optimisation of the setting of the part(s) in the mould as a function of said characteristics (112);
∘ automatic determination of movement commands (114), as a function of said main points, such that for at least one of said steps, called the current step, from an anticipated start time of a subsequent step, before the end of said current step such that, when said current step and said subsequent step correspond to movements of said grasping means (33) in substantially perpendicular directions, the anticipated start time is programmable in the form of a ratio, predetermined or provided by the operator, of the movement of the current step;
- implementation of moulding cycles, each comprising a step of extraction (12) of said moulded part(s) (32), said multi-axis robot being controlled according to said programmed sequence, such that at least two steps are carried out at least in part over the same period of time.

2. Method for controlling a robot according to claim 1, **characterised in that** said step of learning a set of main points (113) comprises a step of defining at least one virtual safety position, called a virtual cam, offset with respect to the position of a physical cam provided to prevent the introduction of said grasping means (33) between the jaws of said mould until it is completely open, said virtual cam being defined in a manner adapted to a mould and/or a part in such a way as to allow controlled introduction of said grasping means (33) between the jaws of said mould before complete opening of the latter.

3. Method for controlling a robot according to claim 1, **characterised in that** said ratio is substantially 70% of the current step displacement.

4. Method for controlling a robot according to any one of claims 2 to 3, **characterised in that** said current step is the opening of said mould and said subsequent step is a displacement of said grasping means (33), and/or said current step is a displacement of said grasping means (33) and said subsequent step is the closing of said mould, where the step of determining displacement commands takes into account said virtual cam or cams.

5. Method for controlling a robot according to any one of claims 1 to 4, **characterised in that** said current step is a displacement of said grasping means (33) and said subsequent step is an actuation of ejection means (31) and/or said current step is a retraction of said ejection means (31), and said subsequent step is a displacement of said grasping means (33).

6. Method for controlling a robot according to any one of claims 1 to 5, **characterised in that** said determination step (114) takes into account the speed of movement of said grasping means (33) and/or acts on said speed of movement

7. Method for controlling a robot according to any one of claims 1 to 6, **characterised in that** it implements a graphical interface, simulating the rendering of each of said steps.

8. Device for controlling a multi-axis robot comprising means (33) for grasping at least one moulded part (32) in a mould of an injection moulding machine, said grasping means (33) being mounted at the end of a mobile arm (34), according to a programmed step sequence, comprising means for creating said programmed sequence, comprising:
- means for the input by an operator of characteristics relating to said mould and/or to said parts (32);
- means for learning a set of main points of the movement of said grasping means (33), input by an operator;
- means for automatically generating commands for said robot, comprising :
• means for the optimisation of the setting of the part or parts (32) in the mould as a function of said characteristics; and
• means for the determination of commands for displacement, as a function of said main points, such that for at least one of said steps, called the current step, from an anticipated start time of a subsequent step, before the end of said current step, such that, when said current step and said subsequent step correspond to displacements of said grasping means (33) in substantially perpendicular directions, the anticipated start time is programmable in the form of a ratio, predetermined or provided by the operator, of the displacement of the current step; and
means for implementing moulding cycles, each comprising an extraction of said moulded part or parts (32), said multi-axis robot being controlled according to said programmed sequence, such that at least two steps are carried out at least partly over the same period of time.
